# EUROPEAN PATENT SPECIFICATION

(11) **EP 2 227 006 B1**
(45) Date of publication and mention of the grant of the patent: **12.12.2012**
(21) Application number: 09003128.7
(22) Date of filing: 04.03.2009
(51) Int. Cl.: H04N 5/445, H04N 5/44

(54) **A method of operating a receiver**
Verfahren zum Betreiben eines Empfängers
Procédé de fonctionnement d'un récepteur

(43) Date of publication of application: 08.09.2010
(73) Proprietor: Sony United Kingdom Limited, Weybridge, Surrey KT13 0XW (GB)
(72) Inventor: Heider, Frank Fritz, 82110 Germering (DE)
(74) Representative: Müller - Hoffmann & Partner

(56) References cited:
- WO-A-02/063865
- WO-A1-2008/107747
- DE-A1- 3 620 428
- JP-A- 2005 159 956
- US-A1- 2005 283 799

## Description

An embodiment of the invention relates to a method for operating a receiver. Further embodiments of the invention relate to a receiver, a server, and a system for enhancing a user's television or radio experience.

### BACKGROUND

Nowadays, efficient transmission of broadcast signals allows transmitting a large amount of information to a user of a receiving device, such as a television or radio receiver.

In US 2005/283799 A1, a system for localizing an EPG program schedule is disclosed. The system includes an EPG service provider station including a database of channels and corresponding EPG program schedule information, a database manager identifying a plurality of channel line-ups potentially receivable at a viewing location, a transmitter, and a receiver. Further, the system includes a multimedia viewer situated at the viewing location including an automatic channel line-up identifier identifying a first line-up of television channels receivable at the viewing location, a channel line-up processor at the viewing location calculating a channel line-up from among the plurality of channel line-ups that substantially matches the first line-up, a receiver receiving from the EPG service provider station the plurality of channel line-ups, and a transmitter transmitting to the EPG service provider station the identifier of the channel line-up calculated by the channel line-up processor. Further, a network connection linking the multimedia viewer to the EPG service provider for transmitting from the EPG service provider station to the multimedia viewer the plurality of channel line-ups and EPG programs schedule information localized to the viewing location based on the identifier of the channel line-up calculated by the channel line-up processor, and for transmitting from the multimedia viewer to the EPG service provider station the identifier of the calculated channel line-up.

In JP 2005 159956 A, it is disclosed to provide a digital broadcast receiver with receiving means for receiving data containing an area code indicative of a specific area, and a decision means for retrieving an area code table within the receiver and for deciding whether a code matching the area code is held. The receiver holds a name representing the area together with at least the area code in the area code table, and generates and displays a predetermined message including the name as a voice input or character string when the codes match. It is further disclosed to explicitly notify an audience of the target area of broadcast services.

DE 36 20 428 A1 discloses an FM receiver containing an FM receiving device for determining a signal identifying traffic information and a switch-over device for changing the transmitting station in the receiver. A scanning circuit is provided which looks for an FM broadcast station which radiates a signal identifying traffic information. Data with respect to the tuning of this broadcast station are continuously stored and provided to the FM receiving device when needed in order to provide traffic information even when a broadcast station is tuned in which does not normally transmit any traffic information.

It is an object of the invention to provide a method for providing information to a user of a receiving device, the information being dependent on a location of the receiving device, thereby enhancing the user's television or radio experience.

This object is solved by a method, a receiver, a server, and a system according to the independent claims.

Further details of the invention will become apparent from a consideration of the drawings and the ensuing description.

### BRIEF DESCRIPTION OF THE SEVERAL VIEWS OF THE DRAWINGS

The accompany drawings are included to provide a further understanding of the embodiments and are incorporated in and constitute a part of the specification. The drawings illustrate embodiments and together with the description serve to explain principles of embodiments. Other embodiments and many of the intended advantages will be readily appreciated as they become better understood by reference to the following description. The elements of the drawings are not necessarily to scale relative to each other. Like reference numerals designate corresponding similar parts.
- Fig. 1: illustrates an embodiment of a method of operating a receiver.
- Fig. 2: illustrates a further embodiment of a method of operating a receiver.
- Fig. 3: illustrates an embodiment of a system including a transmitter, a receiver and an information server.
- Fig. 4: illustrates an embodiment of a method of providing information dependent on the location of a receiver.
- Fig. 5: illustrates a further embodiment of a system including a transmitter, a receiver, and a server.
- Fig. 6a: illustrates a further embodiment of a receiver.
- Fig. 6b: illustrates still a further embodiment of a receiver.
- Fig. 7: illustrates differences between broadcast signals of different broadcast stations in another embodiment of a system including a transmitter and a receiver.
- Fig. 8: illustrates influences of broadcast signals transmitted by different broadcast stations on the signal received by a receiver in a further embodiment of the system.
- Fig. 9: illustrates an embodiment of service information.

### DETAILED DESCRIPTION

In the following, embodiments of the invention are described. It is important to note that all described embodiments may be combined in a way, i.e. that there is no limitation that certain described embodiments may not be combined with others. Further, it should be noted that the same reference signs throughout the Figures denote same or similar elements.

It is further to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

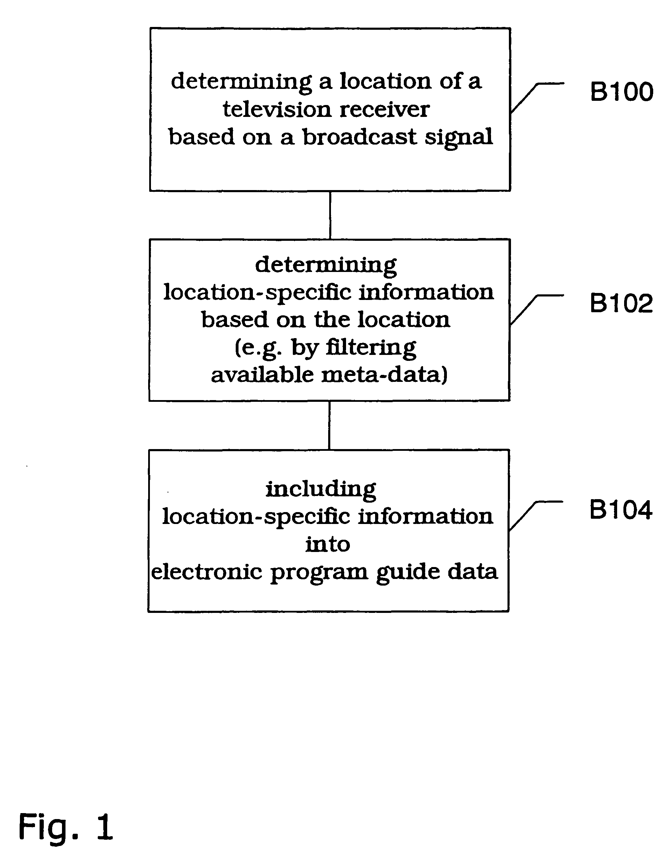

In Fig. 1, an embodiment of a method of operating a receiver is illustrated.

In the embodiment, the receiver is assumed to be a television receiver, which television receiver may be included, for example, in an entertainment device. However, instead of a television receiver, the embodiment of the method may also be applied to a receiver of broadcast signals other than television broadcast signals, for example to a radio receiver for radio broadcast signals.

In the embodiment, information depending on the location of the television receiver is determined. The information depending on the location of the receiver may in the following be referred to as local information, location-specific information, regional information or as information concerning local services. The information may include, for example, advertisings of local shops, such as DVD rental shops, bookstores, food delivery services, or pizza services. The information may further comprise information related to local events such as concerts, theatre performances or festivals. Further, the information may indicate viewpoints at which television channels may be publicly viewed (such as "Premiere Sports Bar", or large screen emissions of soccer games). If the receiver is a radio receiver, also traffic announcements or information related to public transports such as "park and ride" services related to the location of the receiver may be of interest.

The broadcast signal may, for example, be a digital television signal, e.g. according to a DVB, ATSC, ISDB or DMB standard. Accordingly, transmission of the broadcast signal may be realized by terrestrial transmission (DVB-T, DVB-T2, DVB-H, DVB-SH, ATSC, ATSC-M/H, ISDB-T, or T-DMB), by cable transmission (DVB-C, ATSC, ISDB-C), by microwave transmission (DVB-MT, DVB-MC, or DVB-MS), satellite transmission (DVB-S, DVB-S2, DVB-SH, DVB-SMATV, ISDB-S, or S-DMB) and/or by internet transmission (DVB-IPTV).

At B100, the location of the receiver is determined based on the broadcast signal received by the receiver, i.e. by analyzing the broadcast signal. For example, information carried in the broadcast signal may be interpreted. The information about the location of the television receiver may be extracted from the broadcast signal.

In case that the broadcast signal is a digital television signal, e.g. according to a DVB, ATSC, ISDB standard, service information providing information related to the broadcast signal may be transmitted with the broadcast signal, such as for example DVB-SI. The service information may be used as a basis for determining the location. In particular, network information as included, for example, in a DVB-SI network information table (NIT), or program information as provided in the DVB-SI program association table (PAT) may be used for determining the location, as will be explained in the following in more detail.

The location may for example be determined based on a cell list descriptor included in the broadcast signal, e.g. in the service information of a digital television signal. The cell list descriptor may identify a network cell in which the broadcast signal is transmitted, and in which network cell the receiver is likely to be located. This embodiment may for example be suitable for terrestrial signal transmission (DVB-T, DVB-T2, ATSC, ISDB-T or the like) or signal transmission in networks for operation mobile devices (DVB-H, DVB-SH, ATSC-M/H).

In a further embodiment, the location may be determined based on television channels of the broadcast signal. The channels may e.g. be services according to a DVB standard, such as BBC1, ZDF, TF1, FoxNews. For example, when receiving a television channel which is known to be only locally or regionally available, such as a city television channel like "TV München", in a broadcast signal which has been transmitted in a terrestrial network, it may be assumed that the receiver is located in the corresponding location, region and/or city. Such information may for example be derived from the DVB-SI program association table (PAT).

Still further, the broadcast signal, e.g. according to a DVB, ATSC, or ISDB standard, may include transport streams at predetermined frequencies, in which transport streams the television channels may be encoded. Within the transport streams, video, audio, data, subtitle streams of the television channels may be arranged. The location may in this case be determined based on the predetermined frequencies.

In case of the broadcast signal being transmitted in a terrestrial digital television network, it may for example be known from a DVB-SI network information table (NIT) which predetermined frequencies are used by a respective broadcast station. Thus, an area or a region (location) may be determined based on observed frequencies of frequency bands of the broadcast signal.

In a still further embodiment, in which the broadcast signal also includes transport streams, the location may be determined based on an organization of the television channels in the transport streams. For example, it may be known that predetermined television channels are transmitted in a transport stream with a predetermined frequency band from a local or regional broadcast station. If these channels are received from the respective transport stream at the predetermined frequency band from a broadcast signal at a television receiver, this may be an indication that the television receiver is located in a receiving area of the broadcast station.

Further, also methods and parameters of encoding television signals in the transport stream may be analyzed and used as an indication of a transmitting broadcast station and/or as a basis for determining the location of the television receiver.

As mentioned above, an analysis of the broadcast signal may be supported by the service information. For example, transport streams of a DVB or DAB (digital audio broadcast) signal, their respective frequency bands and the organization of television or radio channels within the transport streams may be derived from the service information.

Results from the analysis of the broadcast signal may be regarded as providing a "fingerprint" of a broadcasting station, a transmitter, a transponder, a network and/or a network cell. The information accumulated in the "fingerprint" may relate to channels received at the receiver, transport streams included in the received broadcast signal, frequencies observed in the received broadcast signal, to the organization of the channels in the transport streams or to network cells, as described in the above.

For determining the location of the receiver, the corresponding fingerprint may be transmitted to a server, which server may then determine the location of the receiver. Alternatively, the location may also be determined at the receiver side based on the fingerprint, and information about the location and its respective fingerprint may be transmitted to the server. The server may store a plurality of fingerprints associated with geographic locations. The server may correlate a fingerprint received from a receiver with the stored fingerprints. If the correlation is determined to be above a threshold, then information is sent for the location corresponding to the stored fingerprint.

In both cases, the server may collect and/or accumulate information on locations and their respective "fingerprints" of a plurality of receivers, thereby obtaining topologic information about locations and/or regions. The accumulated information may be used as a basis for determining further locations of further television receivers at the server side. Alternatively or in addition, the accumulated information may also be sent to further television receivers, which television receivers may thereby be enabled to identify their respective location.

At B102, information is determined based on the location. The information may be determined to be of interest for a user located at the location. The information may for example be determined from a superset of information, which superset may include and assemble information for different regions and locations. The superset of information may, for example, be transmitted by the broadcast signal, or may be received from an information server via a further network. The superset of information may include information associated with television channels and may include meta data of television channels, such as meta data for electronic program guides. Further, the information may also include additional information, such as commercial advertisings or public announcements, as mentioned above. The information may be, as examples only, images, audio/video data (in files or streams), textual data or executable applications.

The information (location-specific information) may be determined e.g. by filtering the available superset of information based on the location. Thereby, only advertisings for locally available offers and/or local shops may be included in the location-specific information. Alternatively, all local advertisings related to other locations, e.g. located at a distance exceeding a predetermined threshold may be excluded. The filtering may be done at the receiver. An advantage of such a local filtering is that no filtering is necessary at the broadcast station where such a filtering might not be possible at all since the broadcast station serves many different regions.

Alternatively or in addition, the location-specific information may be collected from a network such as the internet based on a network query specifying the location.

At B104, the information is included into electronic program guide data. The information may thereby be at least in part associated with television channels of the broadcast signal or with a content of the channels. The location-specific information may thereby enrich the electronic program guide data.

In an alternative embodiment, the information may also be displayed without being associated to channels, e.g. on a separate viewing page for local food providing services, or in a separate line on a display.

By the embodiment of the method, content may be delivered on a broadcast network. It is to be noted that the broadcast network may implement a unidirectional transfer of information. With the embodiment of the method, this information may be associated with additional customized information, which may e.g. be delivered by a bidirectional network such as an IP-based network. Thereby, the user's experience may be enhanced.

Further, customized location information may be delivered to the user without a cumbersome prior setting to be performed by the user, and without the need to enter specific search criteria.

Accordingly, both broadcast network and IP-based network may appear as integrated to the user.

Alternatively, also an IP address of a network connected computer could be used to identify the user's location and to provide location specific information. However, determining the location information from a broadcast signal in accordance with the embodiment may be regarded as more accurate and secure, i.e. in that the determined location can be manipulated less easily by a user.

Such manipulation may for example aim at giving a false indication of location, e.g. for circumventing geo-blocking techniques. It is for example well known by internet users to configure a computer to use a proxy server, e.g. to indicate that for example they are in New York rather than Munich.

Further, an IP address allocated by an Internet Service Provider may inaccurately indicate a user's location to a server. Use of the broadcast network is likely to improve accuracy and thereby relevance of the information provided.

It should be noted that even though the embodiment is related to a television receiver, steps B100 to B104 may also be performed for other receivers of broadcast signals, such as radio receivers. This would allow including location-specific information even in nationally or internationally available radio channels.

In such an embodiment, local advertisements could be included in time slots for general advertisements or announcements. This could be of interest for a driver of a car passing through a city unfamiliar with the driver, where local advertisements or public announcements may be helpful for the driver. Further, this could be helpful in providing local or regional traffic announcements.

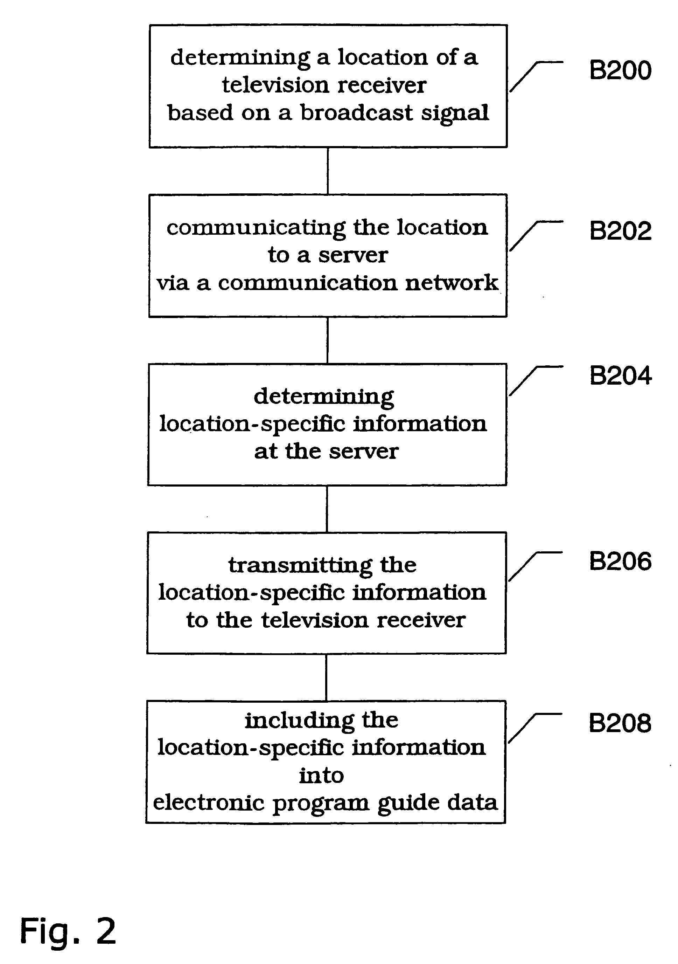

Fig. 2 illustrates a further embodiment of a method of determining location-specific information.

At B200, a location of a television receiver is determined based on a broadcast signal, i.e. by analyzing the broadcast signal or by interpreting information carried in the broadcast signal. This may for example be achieved as already described for B100 of Fig. 1.

At B202, the location is communicated to a server via a communication network. The communication network may be a network other than a broadcast network in which the broadcast signal is transmitted. For example, the broadcast network may be a digital television network, while the internet is used as communication network or back channel.

At B204, the location-specific information is determined at the server side. This may be useful since the server may have access to large information data bases, may send qualified network queries to other servers, and may filter the potentially large amount of information in the background. This may save processing time and processing resources at the television receiver side. The information may include, as mentioned above, local commercial advertisings or public announcements, and may include, for example, images, audio/video data (in files or streams), textual data or executable applications. The information may further include address information, such as an URI (Uniform Resource Identifier) of an application downloadable from a further web server.

At B206, the location-specific information is transmitted from the server to the television receiver, e.g. via the communication network. This transmission may be performed upfront, on request of the television receiver and/or repeatedly, e.g. at predetermined intervals. Performing the transmission upfront may help preventing the user from waiting for the requested information.

As illustrated at B208, the location-specific information may be included into electronic program guide data. The including may be performed as described with respect to B104. In other embodiments, location specific information received from the server may be interpreted by an alternative software stack running on the receiver hardware, e.g. a software stack configured to interpret XML or RSS feeds (as Rich Site Summary, RDF Site Summary, and/or Really Simple Syndication).

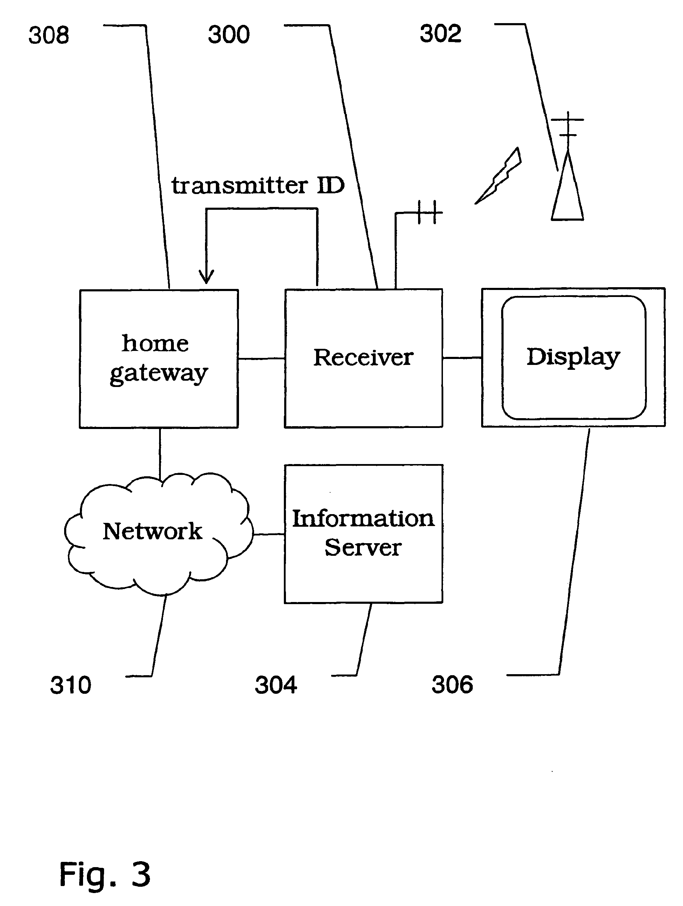

In Fig. 3, an embodiment of a system including a receiver 300, a broadcast station 302 and an information server 304 is illustrated.

The receiver includes a display 306 for displaying e.g. the television channels, the electronic program guide data and the location-specific data. As illustrated, the receiver may be connected over a home gateway 308 to a network 310 over which information server 304 may be reached. The home gateway 308 and receiver 300 may be included in one device, e.g. a set top box. In another embodiment home gateway 308, receiver 300 and display 306 may be included in one device, e.g. a television set.

When receiving a broadcast signal transmitted by broadcast station 302, receiver 300 determines its location as described in the above, e.g. by analyzing the broadcast signal for determining some identifying information identifying broadcast station 302.

Thereby, a transmitter ID may be generated, which transmitter ID is transmitted through home gateway 308 over network 310 to information server 304.

At information server 304, the location-specific information is determined and provided via network 310 through home gateway 308 to receiver 300, where the location-specific information may be presented to the user e.g. at display 306.

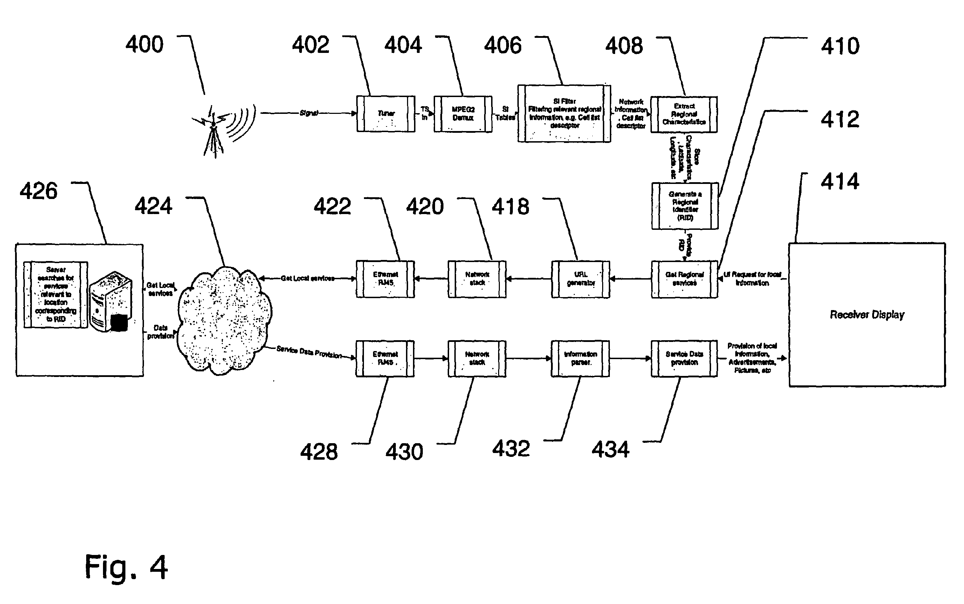

In Fig. 4, a further embodiment of a method of providing information dependent on the location of a receiver is illustrated.

A broadcast station 400 transmits a signal to a tuner 402 of a digital television receiver. The signal is provided to an MPEG2 demultiplexer 404, which extracts service information (SI tables) from the signal.

A service information filter 406 filters the service information for relevant regional information such as cell list descriptors. The relevant information is then transmitted to an extraction unit 408 extracting regional characteristics. These regional characteristics may, for example, be described in terms of geographic latitude and longitude or of corresponding parameters.

Based on the regional characteristics, a regional identifier is generated at 410.

Based on the regional identifier, a user using receiver display 414 may request regional services (local services, local information), as depicted at 412.

At 418, the request is encoded by an URL generator, at 420 transmitted via a network stack and at 422 via Ethernet. After a transfer over a network 424, the request for local services reaches a server at 426.

The server may then search for services relevant to the location corresponding to the regional identifier and may then re-transmit corresponding service data over network 424, at 428 over the Ethernet, at 430 over the network stack, and at 432 through an information passer. At 434, the service data including local information such as local advertisements is provided and presented to the user at receiver display 414.

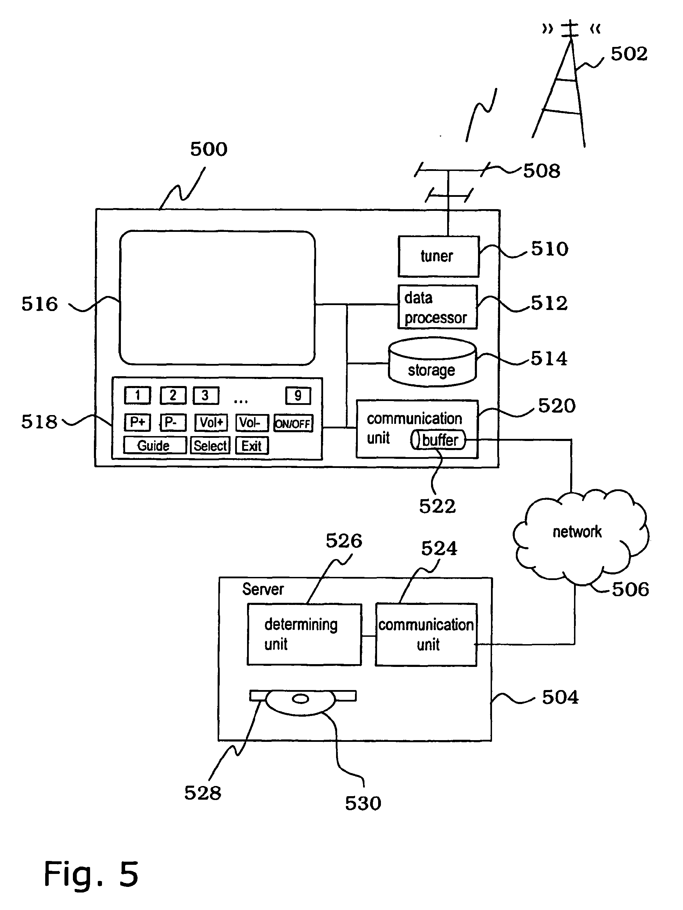

Fig. 5 shows a further embodiment of a television receiver 500 for receiving a broadcast signal transmitted by a broadcast station 502. Receiver 500 is further connected to a server 504 via a network 506.

In the embodiment of Fig. 5, the broadcast signal is received by an antenna 508 and a tuner 510. The broadcast signal is then analyzed at a data processor 512 for identifying information allowing identifying broadcast station 502. For example, the location may be determined as described in the above. The location thus obtained may then be stored in a stored 515.

Upon a request issued by a user communicating with television receiver 500 via a display 516 and a key pad 518, the location may be communicated via a communication unit 520 over network 506 to server 504.

At the server side, a communication unit 524 receives the location, based upon which the location-specific information may be determined by a determining unit 526 (data processor).

The location-specific data may then be transmitted over network 506 to television receiver 500, where it may be displayed at display 516.

In addition, server 504 may include a reading device at 528 adapted to read a storage medium 530 including computer program instructions that may cause a data processor to execute an embodiment of the above-described method. Further, the computer program instructions may also be transferred over network 506 to television receiver 500, where they may cause television receiver 500 to contribute to the method as described in the above.

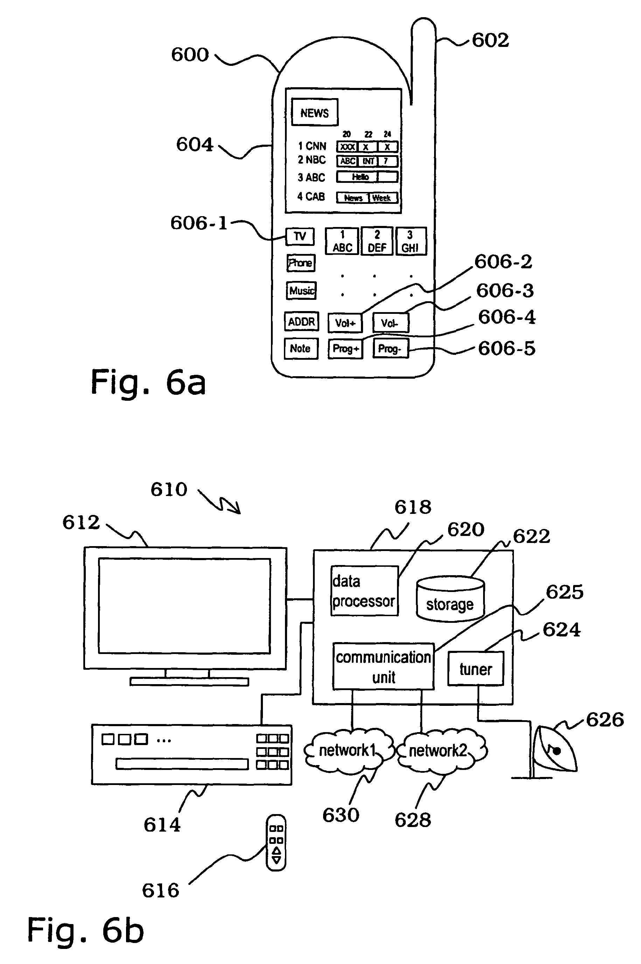

Fig. 6a illustrates a further embodiment of a receiver. In the embodiment, the receiver is included in mobile phone 600. Mobile phone 600 includes an antenna 602 adapted to receive broadcast signals and to communicate with a server, e.g. server 504, via a network. Further, a display 604 for displaying television channels and related information such as EPG data is provided. Mobile phone 600 may further include special keys for using the handheld device as television receiver, such as keys 606-1 to 606-5.

In Fig. 6b, a media center personal computer 610 is depicted. Media center personal computer 610 includes a large display 612 capable of displaying a large amount of information. For enabling a user to enter commands, media center personal computer 610 includes a key pad 614 and further a remote control 616. A central unit 618 of media center personal computer 610 includes a data processor 620, a storage 622 in which information may be stored, a tuner 624 connected to a satellite receiving unit 626, and a communication unit 628 enabling communication via networks 630 and 632, e.g. with server 504 or with further broadcast stations.

The foregoing devices in Figs. 5, 6a and 6b illustrate the variety of television receivers 500, 600 and 610 which may be used in different broadcast networks, receiving different broadcast signals. For the different receivers, different methods of identifying the location of the broadcast signal may be used. While receiver 500 may identify broadcast station 502 e.g. based on observed frequencies in a broadcast signal, mobile phone 600 may refer to cell list descriptors of the broadcast network and/or the telecommunication network. Media center personal computer 610 may, contrasting to this, identify its location based on user interaction, and may help identifying "fingerprints" of the broadcast networks available at the location, transmitting the fingerprints via a communication network to other receivers.

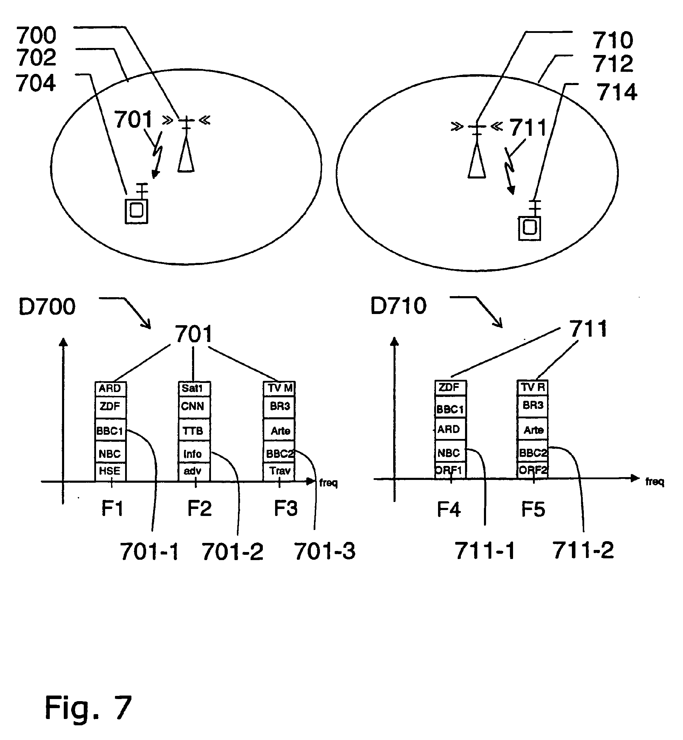

In Fig. 7, differences in the broadcast signal of different broadcast stations are illustrated with respect to an embodiment of a system including a transmitter and a receiver.

On the left hand side, a broadcast station 700 transmitting a broadcast signal 701 in an area 702 is depicted. A receiver 704 is located in the area 702, which receiver 704 is adapted to receive the broadcast signal transmitted by broadcast station 700.

Diagram D700 illustrates the broadcast signal 701 received by receiver 704. On a horizontal axis denoting frequencies, three frequency bands around centre frequencies F1, F2, and F3 are depicted. The frequency bands respectively transmit transport streams 701-1, 701-2, 701-3 including, e.g. encoding and transporting, television channels. In the embodiment, transport stream 701-1 with centre frequency F1 includes television channels ARD, ZDF, BBC1, NBC, and HSE. The further transport stream 701-2 with centre frequency F2 includes further television channels Sat1, CNN, TTB, Info, and adv, while the third transport stream 701-3 around centre frequency F3 transmits still further television channels TV M, BR3, Arte, BBC2, and Trav.

On the right hand side, a further broadcast station 710 transmits its broadcast signal 711 in a further area 712, in which further area 712 a further television receiver 714 is located.

Diagram 710 illustrates two further transport streams 711-1, 711-2 transmitted with further centre frequencies F4 and F5, the first further transport stream 711-1 including television channels ZDF, BBC1, ARD, NBC, and ORF1, and the second further transport stream 711-2 including television channels TV R, BR3, Arte, BBC2, and ORF2.

When assuming that television channels TV M and TV R are locally available television channels like city TV stations "TV München" and "TV Rosenheim", television receiver 704 may determine its location as Munich since receiving television channel TV M. On the other hand, television receiver 714 may determine its location as Rosenheim since receiving TV R.

In the embodiment, the location may additionally or alternatively be determined based on an organization of the television channels in the transport streams 701-1, 701-2, 701-3, 711-1, 711-2. For example, the encoding of the respective television channels to the respective transport streams 701-1, 701-2, 701-3 as depicted in diagram D700 may be characteristic for the Munich region, while the assignment of television channels to transport streams 711-1, 711-2 as depicted in diagram D710 may be characteristic for Rosenheim.

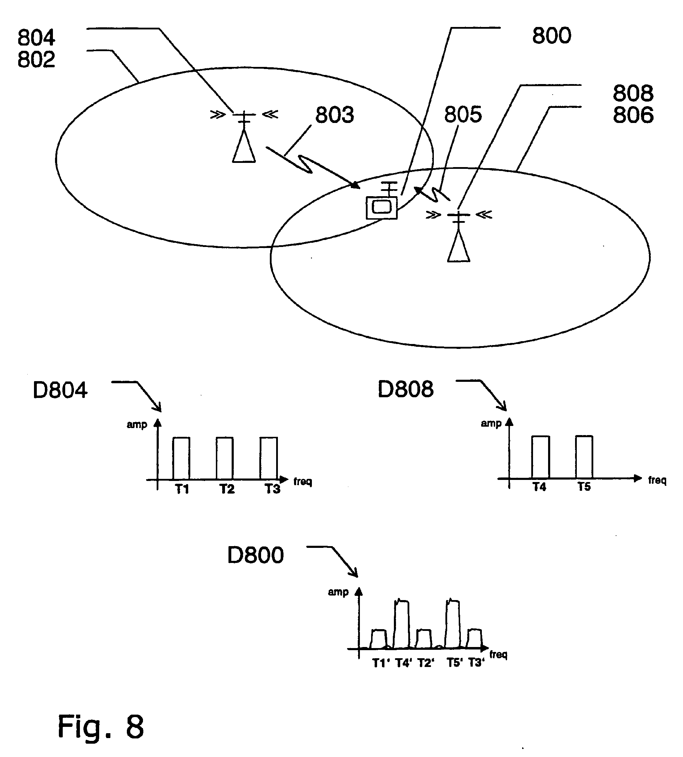

In Fig. 8, influences of broadcast signals 803, 805 transmitted by a plurality of broadcast stations are illustrated for a further embodiment of the system. In the embodiment, a television receiver 800 is located in an overlapping region of a transmission area 802 of a broadcast station 804 and a further transmission area 806 of a further broadcast station 808.

Diagrams D804 and D808 illustrate respectively transport streams T1, T2 and T3 used by broadcast station 804 and of transport streams T4 and T5 used by broadcast station 808.

A broadcast signal that may be received at television receiver 800 is depicted in diagram D800. As illustrated, the received broadcast signal may include a first part, corresponding to signal 803 broadcast by station 804, and a second part corresponding to signal 805 broadcast by station 805.. A location of television receiver 800 may now be determined based on the first and second parts.

For determining the location, a field strength of the signal may be analyzed. Therefore, a field strength of the transport streams recognized in the received broadcast signal and the frequency bands may be determined. From these frequencies, or from the organization of the television channels in the respective transport streams, broadcast station 404 and further broadcast station 808 may be identified.

Based on these analyses, it may be assumed that television receiver 800 is located between a known location of broadcast station 804 and a further known location of broadcast station 808. Further, it may be assumed that television receiver 800 is located nearer to broadcast station 808 than to broadcast station 804, since received transport streams T4' and T5', corresponding further transport streams T4 and T5 emitted from broadcast station 808, are received with the higher amplitude than received transport streams T1', T2' and T3', corresponding to transport streams T1, T2 and T3 transmitted by broadcast station 804, respectively.

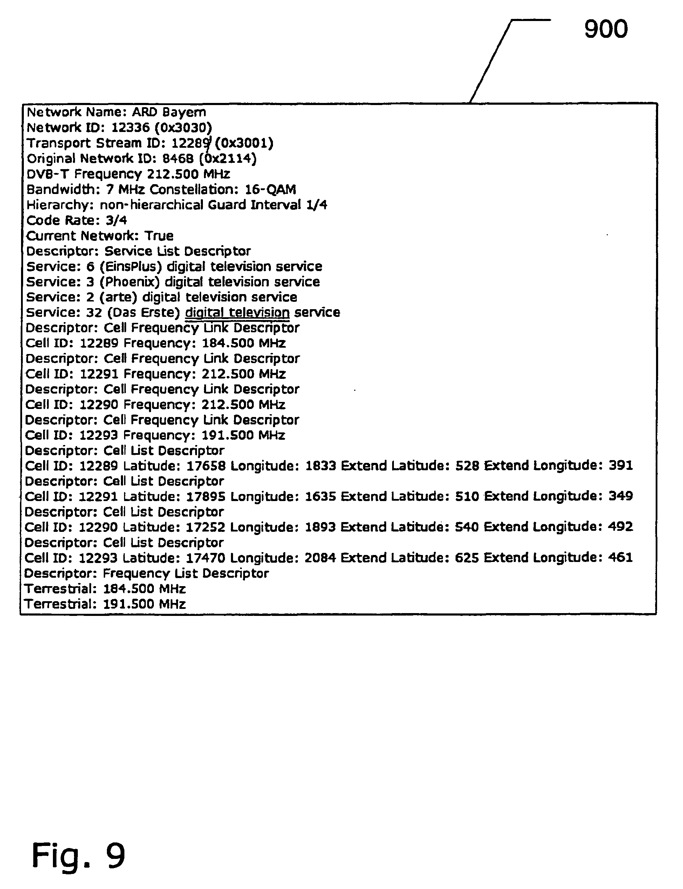

In Fig. 9, an embodiment of service information which may be provided in a broadcast signal is illustrated. From the service information, the network name "ARD Bayern" reflects the region. Further, transport streams are identified with frequencies and bandwidths. Additionally, a service list descriptor mentions the services, i.e. television channels included in the broadcast signal. Additionally, cell IDs are described with their geographic latitude and longitude and their respective extent.

Based on these parts of the service information, the location of a receiver may be determined as described in the above.

## Claims

1. A method of operating a receiver (300), comprising:
determining (B 100) a location of the receiver by analyzing a broadcast signal received by the receiver:
determining (B102) location-specific information for a user, the location-specific information being dependent on the determined location; and
presenting (B104) the location-specific information to the user, wherein
the broadcast signal includes transport streams, and wherein
the location is determined., based on an encoding or assignment of television channels (701-1, ..., 711-1) to the transport streams (701, 711).

2. The method according to claim 1, further comprising:
communicating (B202) the location to a server (304) via a communication network (310);
determining (B204) the location-specific information at the server (304); and
transmitting (B206) the location-specific information to the receiver (300).

3. The method according to claim 1, wherein the location-specific information is determined by filtering data included in the received broadcast signal, the filtering being dependent on the determined location.

4. The method according to any of claims 1 to 3, wherein the location-specific information is at least partly associated with television channels of the broadcast signal or with a content of the channels.

5. The method according to any of the preceding claims, wherein the location is determined by interpreting service information (900) included in the broadcast signal.

6. The method according to any of the preceding claims, wherein the location is determined by measuring and interpreting a field strength (D800, D804, D808) of the received broadcast signal (803, 805).

7. The method according to any of the preceding claims, wherein the location is determined based on television channels (701-1, ..., 711-2) carried in the broadcast signal (701, 711).

8. The method according to any of the preceding claims, wherein the broadcast signal (D800) includes a first part (D804) and a second part (D808), the first and second parts being broadcast by a first broadcast station (804) and a second broadcast station (808), respectively, wherein the first broadcast station (804) is a broadcast station other than the second broadcast station (808), and wherein the location is determined based on the first and second parts (D804, D808).

9. The method according to any of the preceding claims, wherein the broadcast signal is a digital television signal.

10. A receiver (500), comprising:
a tuner (510) adapted to receive a broadcast signal;
a data processor adapted to analyze the broadcast signal and to thereby determine a location of the receiver (500); and
an interface unit (516) adapted to present location-specific information to a user, which location-specific information depends on the determined location, wherein
the broadcast signal includes transport streams, and wherein
the location is determined., based on an encoding or assignment of television channels (701-1, ..., 711-1) to the transport streams (701, 711).

11. The receiver (500) according to claim 10, further comprising:
a communication unit (520) adapted to communicate the determined location to a server (504) over a network (506) and adapted to receive the location-specific information from the server (504).

12. A system, comprising:
a receiver (500), comprising
a tuner (510) adapted to receive a broadcast signal including transport streams;
a data processor (512) adapted to analyze the broadcast signal and to thereby determine a location of the receiver (500), wherein the location is determined based on an encoding or assignment of television channels (701-1, ..., 711-1) to the transport streams (701, 711);
an interface unit (516) adapted to present location-specific information to a user, which location-specific information depends on the determined location; and
a communication unit (520) adapted to communicate the determined location over a network and adapted to receive the location-specific information; and
a server (504), comprising
a communication unit (524) adapted to receive the determined location from the receiver (500) and adapted to transmit the location-specific information to the receiver (500); and
a data processor (526) adapted to determine the location-specific information with respect to the determined location.

## Patentansprüche

1. Verfahren zum Betreiben eines Empfängers (300), umfassend:
Bestimmen (B100) eines Orts des Empfängers durch Analysieren eines durch den Empfänger empfangenen ausgestrahlten Signals;
Bestimmen (B102) von ortsspezifischen Informationen für einen Benutzer, wobei die ortsspezifischen Informationen von dem bestimmten Ort abhängig sind; und
Präsentieren (B104) der ortsspezifischen Informationen für den Benutzer, wobei das ausgestrahlte Signal Transportströme umfasst und wobei
der Ort auf der Basis einer Codierung oder Vergabe von Fernsehkanälen (701-1, ..., 711-1) an die Transportströme (701, 711) bestimmt wird.

2. Verfahren nach Anspruch 1, ferner umfassend:
Übermitteln (B202) des Orts zu einem Server (304) über ein Kommunikationsnetzwerk (310);
Bestimmen (B204) der ortsspezifischen Informationen in dem Server (304); und
Übertragen (B206) der ortsspezifischen Informationen zu dem Empfänger (300).

3. Verfahren nach Anspruch 1, wobei die ortsspezifischen Informationen durch Filtern von in dem empfangenen ausgestrahlten Signal enthaltenen Daten bestimmt werden, wobei die Filterung von dem bestimmten Ort abhängig ist.

4. Verfahren nach einem der Ansprüche 1 bis 3, wobei die ortsspezifischen Informationen mindestens teilweise Fernsehkanälen des ausgestrahlten Signals oder einem Inhalt der Kanäle zugeordnet sind.

5. Verfahren nach einem der vorhergehenden Ansprüche, wobei der Ort durch Interpretieren von in dem ausgestrahlten Signal enthaltenen Dienstinformationen (900) bestimmt wird.

6. Verfahren nach einem der vorhergehenden Ansprüche, wobei der Ort durch Messen und Interpretieren einer Feldstärke (D800, D804, D808) des empfangenen ausgestrahlten Signals (803, 805) bestimmt wird.

7. Verfahren nach einem der vorhergehenden Ansprüche, wobei der Ort auf der Basis von in dem ausgestrahlten Signal (701, 711) geführten Fernsehkanälen (701-1, ..., 711-2) bestimmt wird.

8. Verfahren nach einem der vorhergehenden Ansprüche, wobei das ausgestrahlte Signal (D800) einen ersten Teil (D804) und einen zweiten Teil (D808) umfasst, wobei der erste und der zweite Teil durch eine erste Ausstrahlungsstation (804) bzw. eine zweite Ausstrahlungsstation (808) ausgestrahlt werden, wobei die erste Ausstrahlungsstation (804) eine von der zweiten Ausstrahlungsstation (808) verschiedene Ausstrahlungsstation ist und wobei der Ort auf der Basis des ersten und zweiten Teils (D804, D808) bestimmt wird.

9. Verfahren nach einem der vorhergehenden Ansprüche, wobei das ausgestrahlte Signal ein Digitalfernsehsignal ist.

10. Empfänger (500), umfassend:
einen Tuner (510), der dafür ausgelegt ist, ein ausgestrahltes Signal zu empfangen;
einen Datenprozessor, der dafür ausgelegt ist, das ausgestrahlte Signal zu analysieren und dadurch einen Ort des Empfängers (500) zu bestimmen; und
eine Schnittstelleneinheit (516), die dafür ausgelegt ist, einem Benutzer ortsspezifische Informationen zu präsentieren, wobei die ortsspezifischen Informationen von dem bestimmten Ort abhängen, wobei
das ausgestrahlte Signal Transportströme umfasst und wobei
der Ort auf der Basis einer Codierung oder Vergabe von Fernsehkanälen (701-1, ..., 711-1) an die Transportströme (701, 711) bestimmt wird.

11. Empfänger (500) nach Anspruch 10, ferner umfassend:
eine Kommunikationseinheit (520), die dafür ausgelegt ist, den bestimmten Ort über ein Netzwerk (506) zu einem Server (504) zu übermitteln und dafür ausgelegt ist, die ortsspezifischen Informationen von dem Server (504) zu empfangen.

12. System, umfassend:
einen Empfänger (500), umfassend:
einen Tuner (510), der dafür ausgelegt ist, ein ausgestrahltes Signal zu empfangen, das Transportströme umfasst;
einen Datenprozessor (512), der dafür ausgelegt ist, das ausgestrahlte Signal zu analysieren und dadurch einen Ort des Empfängers (500) zu bestimmen, wobei der Ort auf der Basis einer Codierung oder Vergabe von Fernsehkanälen (701-1, ..., 711-1) an die Transportströme (701, 711) bestimmt wird;
eine Schnittstelleneinheit (516), die dafür ausgelegt ist, einem Benutzer ortsspezifische Informationen zu präsentieren, wobei die ortsspezifischen Informationen von dem bestimmten Ort abhängen; und
eine Kommunikationseinheit (520), die dafür ausgelegt ist, den bestimmten Ort über ein Netzwerk zu übermitteln und dafür ausgelegt ist, die ortsspezifischen Informationen zu empfangen; und
einen Server (504), umfassend:
eine Kommunikationseinheit (524), die dafür ausgelegt ist, den bestimmten Ort von dem Empfänger (500) zu empfangen und dafür ausgelegt ist, die ortsspezifischen Informationen zu dem Empfänger (500) zu übertragen; und
einen Datenprozessor (526), der dafür ausgelegt ist, die ortsspezifischen Informationen mit Bezug auf den bestimmten Ort zu bestimmen.

## Revendications

1. Procédé d'exploitation d'un récepteur (300), comprenant :
la détermination (B100) d'un emplacement du récepteur en analysant un signal de diffusion reçu par le récepteur ;
la détermination (B102) d'informations spécifiques à l'emplacement d'un usager, les informations spécifiques à l'emplacement dépendant de l'emplacement déterminé ; et
la présentation (B104) à l'usager des informations spécifiques à l'emplacement, dans lequel le signal de diffusion comporte des flux de données de transport ; et dans lequel
l'emplacement est déterminé en fonction d'un codage ou d'une attribution de canaux de télévision (701-1, ..., 711-1) aux flux de données de transport (701, 711).

2. Procédé selon la revendication 1, comprenant en outre :
la communication (B202) de l'emplacement à un serveur (304) par l'intermédiaire d'un réseau de communication (310) ;
la détermination (B204) des informations spécifiques à l'emplacement au niveau du serveur (304), et
la transmission (B206) des informations spécifiques à l'emplacement au récepteur (300).

3. Procédé selon la revendication 1, dans lequel les informations spécifiques à l'emplacement sont déterminées en filtrant des données incluses dans le signal diffusé reçu, le filtrage dépendant de l'emplacement déterminé.

4. Procédé selon l'une quelconque des revendications 1 à 3, dans lequel les informations spécifiques à l'emplacement sont au moins partiellement associées à des canaux de télévision du signal de diffusion ou à un contenu des canaux.

5. Procédé selon l'une quelconque des revendications précédentes, dans lequel l'emplacement est déterminé en interprétant des informations de service (900) incluses dans le signal de diffusion.

6. Procédé selon l'une quelconque des revendications précédentes, dans lequel l'emplacement est déterminé en mesurant et interprétant un champ de force (D800, D804, D808) du signal de diffusion reçu (803, 805).

7. Procédé selon l'une quelconque des revendications précédentes, dans lequel l'emplacement est déterminé en fonction de canaux de télévision (701-1, ..., 711-2) portés dans le signal de diffusion (701, 711).

8. Procédé selon l'une quelconque des revendications précédentes, dans lequel le signal de diffusion (D800) comporte une première partie (D804) et une seconde partie (D808), les première et seconde parties étant diffusées par une première station de diffusion (804) et une seconde station de diffusion (808), respectivement, dans lequel la première station de diffusion (804) est une station de diffusion autre que la seconde station de diffusion (808), et dans lequel l'emplacement est déterminé en fonction des première et seconde parties (D804, D808).

9. Procédé selon l'une quelconque des revendications précédentes, dans lequel le signal de diffusion est un signal de télévision numérique.

10. Récepteur (500) comprenant :
un syntoniseur (510) adapté pour recevoir un signal de diffusion ;
un processeur de données adapté pour analyser le signal de diffusion et ainsi déterminer un emplacement du récepteur (500) ; et
une unité d'interface (516) adaptée pour présenter des informations spécifiques à l'emplacement à un usager, les informations spécifiques à l'emplacement dépendant de l'emplacement déterminé, dans lequel
le signal de diffusion comporte des flux de données de transport, et dans lequel l'emplacement est déterminé en fonction d'un codage ou d'une attribution de canaux de télévision (701-1, ..., 711-1) aux flux de données de transport (701, 711).

11. Récepteur (500) selon la revendication 10, comprenant en outre :
une unité de communication (520) adaptée pour communiquer l'emplacement déterminé à un serveur (504) sur un réseau (506) et adaptée pour recevoir les informations spécifiques à l'emplacement depuis le serveur (504).

12. Système, comprenant :
un récepteur (500) comprenant
un syntoniseur (510) adapté pour recevoir un signal de diffusion comportant des flux de données de transport ;
un processeur de données (512) adapté pour analyser le signal de diffusion et ainsi déterminer un emplacement du récepteur (500), l'emplacement étant déterminé en fonction d'un codage ou d'une attribution de canaux de télévision (701-1, ..., 711-1) aux flux de données de transport (701, 711) ;
une unité d'interface (516) adaptée pour présenter des informations spécifiques à l'emplacement à un usager, lesquelles informations spécifiques à l'emplacement dépendent de l'emplacement déterminé ; et
une unité de communication (520), adaptée pour communiquer l'emplacement déterminé sur un réseau et adaptée pour recevoir les informations spécifiques à l'emplacement ; et
un serveur (504), comprenant :
une unité de communication (524) adaptée pour recevoir l'emplacement déterminé depuis le récepteur (500) et adaptée pour transmettre les informations spécifiques à l'emplacement au récepteur (500) ; et
un processeur de données (526) adapté pour déterminer les informations spécifiques à l'emplacement relativement à l'emplacement déterminé.
